# EUROPEAN PATENT SPECIFICATION

(11) **EP 2 980 958 B1**
(45) Date of publication and mention of the grant of the patent: **07.11.2018**
(21) Application number: 15179402.1
(22) Date of filing: 31.07.2015
(51) Int. Cl.: H02J 7/00

(54) **CHARGING CONTROL METHOD AND ELECTRONIC DEVICE FOR SUPPORTING THE SAME**
LADESTEUERUNGSVERFAHREN UND ELEKTRONISCHE VORRICHTUNG DAMIT
PROCÉDÉ DE COMMANDE DE CHARGE ET DISPOSITIF ÉLECTRONIQUE LE SUPPORTANT

(30) Priority: 31.07.2014 KR 20140098104
(43) Date of publication of application: 03.02.2016
(73) Proprietor: Samsung Electronics Co., Ltd., Gyeonggi-do 443-742 (KR)
(72) Inventor: JEONG, Seo Young, Gyeonggi-do (KR); KIM, Do Hyoung, 443-751 Gyeonggi-do (KR); HAHN, Seung Jin, 443-803 Gyeonggi-do (KR)
(74) Representative: HGF Limited

(56) References cited:
- EP-A2- 2 664 479
- EP-A2- 2 701 272
- WO-A2-2012/132376
- US-A1- 2006 091 858

## Description

### PRIORITY

This application claims priority to Korean patent application filed on July 31, 2014 in the Korean Intellectual Property Office and assigned Serial number 10-2014-0098104, the content of which is incorporated herein by reference.

### BACKGROUND OF THE INVENTION

### 1. Field of the Invention

The present disclosure relates to a charging function of an electronic device.

### 2. Background of the Invention

In general, each of electronic devices of the related art supports various user functions using commercial power or power supplied from a battery and the like. For example, each of portable electronic devices has an embedded battery and receives power from the embedded battery. The battery used in each of the electronic devices may be implemented with a rechargeable battery. Each of the electronic devices of the related art supports a charging function associated with charging the battery.

There are many situations in which it is not easy to secure time to continuously charge the battery when a user uses the electronic device. In addition, recently, as a display of the electronic device is increased in size and several modules are mounted on the electronic device to support various functions, a high-capacity battery is used. Accordingly, as time required to fully charge the high-capacity battery of is increased, there is a growing trend towards user inconvenience of charging the battery of the electronic device.

The above information is presented as background information only to assist with an understanding of the present disclosure. No determination has been made, and no assertion is made, as to whether any of the above might be applicable as prior art with regard to the present disclosure.

EP 2664479 appears to disclose a system and method for providing energy management and maintenance of a high energy battery pack that does not require installation of the battery pack into an operational electric vehicle.

### SUMMARY OF THE INVENTION

Aspects of the present disclosure are to address at least the above-mentioned problems and/or disadvantages and to provide at least the advantages described below. Accordingly, an aspect of the present disclosure is to provide a charging control method of safely protecting an electronic device while fast charging a battery and the electronic device for supporting the same.

In accordance with an aspect of the present disclosure, a charging control method of an electronic device is provided. The charging control method includes establishing a communication channel with a charging device connected to the electronic device, detecting an abnormal charging operation of the charging device, and initializing the charging device or an input and output interface of the electronic device connected with the charging device in response to the detection of the abnormal charging operation.

In accordance with another aspect of the present disclosure, an electronic device is provided. The electronic device includes an input and output interface configured to provide a connection to a charging device, and a processor (e.g., charging control module) configured to detect an abnormal charging operation of the charging device, and to control initialization of the charging device or the input and output interface in response to the detection of the abnormal charging operation.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 is a drawing illustrating a schematic electronic device charging environment according to various embodiments of the present disclosure;
FIG. 2 is a block diagram illustrating configurations of an electronic device and a charging device according to various embodiments of the present disclosure;
FIG. 3 is a block diagram illustrating a detailed configuration of a charging control module according to various embodiments of the present disclosure;
FIG. 4 is a block diagram illustrating an electronic device operation environment for controlling charging according to various embodiments of the present disclosure;
FIG. 5 is a flowchart illustrating a charging control method of an electronic device according to various embodiments of the present disclosure;
FIG. 6 is a flowchart illustrating a method of processing an error in charging an electronic device according to various embodiments of the present disclosure; and
FIG. 7 is a drawing illustrating screens of an electronic device associated with controlling charging according to various embodiments of the present disclosure.

Throughout the drawings, it should be noted that like reference numbers are used to depict the same or similar elements, features, and structures.

### DETAILED DESCRIPTION OF EMBODIMENTS OF THE PRESENT INVENTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

The term "include," "comprise," "including," or "comprising" used herein indicates disclosed functions, operations, or existence of elements but does not exclude other functions, operations or elements. It should be further understood that the term "include", "comprise", "have", "including", "comprising", or "having" used herein specifies the presence of stated features, integers, operations, elements, components, or combinations thereof but does not preclude the presence or addition of one or more other features, integers, operations, elements, components, or combinations thereof.

The meaning of the term "or" or "at least one of A and/or B" used herein includes any combination of words listed together with the term. For example, the expression "A or B" or "at least one of A and/or B" may indicate A, B, or both A and B.

The terms, such as "first", "second", and the like used herein may refer to various elements of various embodiments of the present disclosure, but do not limit the elements. For example, such terms do not limit the order and/or priority of the elements. Furthermore, such terms may be used to distinguish one element from another element. For example, "a first user device" and "a second user device" indicate different user devices. For example, without departing the scope of the present disclosure, a first element may be referred to as a second element, and similarly, a second element may be referred to as a first element.

In the description below, when one part (or element, device, etc.) is referred to as being "connected" to another part (or element, device, etc.), it should be understood that the former can be "directly connected" to the latter, or "electrically connected" to the latter via an intervening part (or element, device, etc.). It will be further understood that when one component is referred to as being "directly connected" or "directly linked" to another component, it means that no intervening component is present.

Unless otherwise defined herein, all the terms used herein, which include technical or scientific terms, may have the same meaning that is generally understood by a person skilled in the art. It will be further understood that terms, which are defined in a dictionary and commonly used, should also be interpreted as is customary in the relevant related art and not in an idealized or overly formal sense unless expressly so defined herein in various embodiments of the present disclosure.

Hereinafter, electronic devices according to various embodiments of the present disclosure will be described with reference to the accompanying drawings.

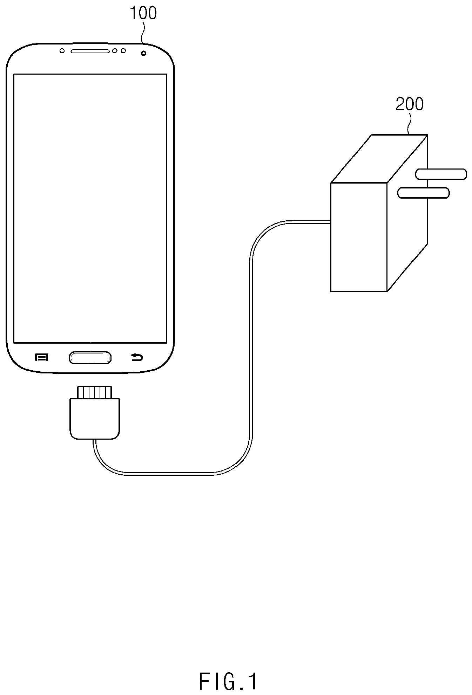

FIG. 1 is a drawing illustrating a schematic electronic device charging environment according to various embodiments of the present disclosure.

Referring to FIG. 1, an electronic device charging environment may include an electronic device 100 and a charging device 200.

The electronic device 100 may include a body associated with performing functions and an input and output interface (at least one of a connection unit, a detection module, or a charging module) for providing support to connect and communicate with the charging device 200. If the charging device 200 connects to a certain portion of the input and output interface, for example the connection unit, the electronic device 100 may communicate with the charging device 200 and may verify a type of the charging device 200 (e.g., a general charging device or a fast charging device). When the charging device 200 is the fast charging device, the electronic device 100 may communicate with the charging device 200 and may determine a charging setting (or configuration) to charge its battery. The electronic device 100 may change a state of the charging module based on the determined charging setting. The electronic device 100 may charge the battery using power supplied from the charging device 200. According to various embodiments of the present disclosure, the electronic device 100 may control the charging device 200 to perform a charging function with a specified charging setting or to initialize a setting associated with charging, based on at least one of a communication state with the charging device 200 or a power supply state of the charging device 200. The electronic device 100 may control correct power supply of the charging device 200 or may block incorrect power supply to prevent damage, based on the above-mentioned operation.

The charging device 200 may include a connection interface (e.g., a connector and a cable) which may connect to the input and output interface of the electronic device 100 and a device for converting commercial power into power used for charging the electronic device 100 and supplying the converted power to the electronic device 100. According to various embodiments of the present disclosure, the charging device 200 may transmit power supplied from a commercial power supply, which has a specific voltage among a plurality of voltages, to the electronic device 100. In this regard, the charging device 200 may communicate with the electronic device 100 and may supply power corresponding to a specified charging setting to the electronic device 100 in response to a request of the electronic device 100. According to an embodiment of the present disclosure, the charging device 200 may be initialized according to a request of the electronic device 100. Alternatively, the charging device 200 may supply a specific power to the electronic device 100 according to a request of the electronic device 100.

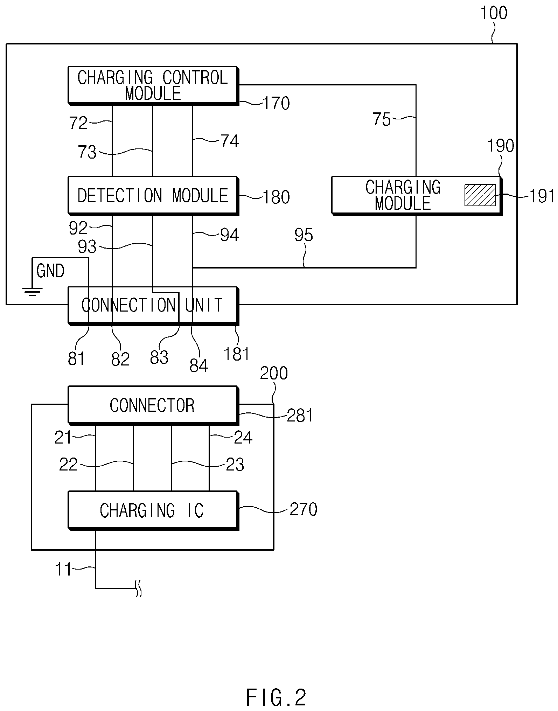

FIG. 2 is a block diagram illustrating configurations of an electronic device and a charging device according to various embodiments of the present disclosure.

Referring to FIG. 2, an electronic device 100 may include a connection unit 181, a detection module 180, or a charging module 190 which corresponds to an input and output interface, and a charging control module 170 associated with controlling charging.

The connection unit 181 may be a part of the input and output interface which is installed to connect to a charging device 200. For example, the connection unit 181 may have a groove sunk to the inside from a surface of a body of the electronic device 100. Connection terminals 81 to 84 which electrically connect with electrical terminals formed on a connector 281 of the charging device 200 may be disposed in the groove. For example, the connection unit 181 may be implemented with the groove corresponding to the appearance of the connector 281 of the charging device 200. The ground terminal 81, the D+ terminal 82, the D- terminal 83, and the VBus terminal 84 may be disposed in the groove of the connection unit 181.

The ground terminal 81 may play a role in grounding an external device (e.g., the charging device 200) connected to the electronic device 100. In this regard, the ground terminal 81 may connect with a ground portion GND formed in the electronic device 100. The D+ terminal 82 and the D- terminal 83 may be used to determine a type of the external device (e.g., the charging device 200) or may be used to communicate with the external device. The D+ terminal 82 and the D- terminal 83 may connect to the detection module 180 through a D+ connection line 92 and a D-connection line 93. The VBus terminal 84 may be used to be supplied power from the external device (e.g., the charging device 200). For example, the VBus terminal 84 may connect with a power detection line 94 and a power charging line 95, and may transmit power supplied from the charging device 200 to the detection module 180 and the charging module 190. According to various embodiments of the present disclosure, the connection unit 181 may form a pull-up voltage on at least one terminal and may transmit a signal change according to connection of the external device to the detection module 180. For example, the connection unit 181 may form the pull-up voltage on the VBus terminal 84 and may transmit a signal change of the VBus terminal 84 to the detection module 180.

The detection module 180 may be disposed between the connection unit 181 and the charging control module 170 and may detect a state of power supplied from the charging device 200. For example, the detection module 180 may detect a level of voltage supplied from the charging device 200. According to various embodiments of the present disclosure, the detection module 180 may connect with the D+ terminal 82 of the connection unit 181 through the D+ connection line 92 and may connect with the D- terminal 83 of the connection unit 181 through the D- connection line 93. The detection module 180 may connect with the VBus terminal 84, which is disposed in the connection unit 181, through the power detection line 94. As the detection module 180 connects with the VBus terminal 84 through the power detection line 94, it may detect a level of power (e.g., a level of a charging voltage) supplied through the connection unit 181 from the charging device 200.

According to various embodiments of the present disclosure, the detection module 180 may connect to the charging control module 170 through a D+ signal line 72 and a D- signal line 73. The D+ signal line 72 and the D- signal line 73 may be used as a communication channel between the charging control module 170 and the charging device 200. Also, the detection module 180 may connect with the charging control module 170 through a control line 74. The detection module 180 may detect voltage formed on the VBus terminal 84 using the power detection line 94, and may transmit a charging voltage of the charging device 200 to the charging control module 170. According to various embodiments of the present disclosure, the detection module 180 may receive a signal (e.g., a pull-up voltage change signal) according to connection of the external device from the connection unit 181.

The detection module 180 may transmit a signal, which is changed as the external device connects to the connection unit 181, to the charging control module 170 through the control line 74. In this regard, the detection module 180 may connect with the charging control module 170 through an interrupt signal line (not shown). If an interrupt signal of the detection module 180 is transmitted to the charging control module 170, the charging control module 170 may verify a state of the detection module 180, and may verify a detection signal (a level of a charging voltage) detected by the detection module 180 or may control the detection module 180.

According to various embodiments of the present disclosure, the charging module 190 may include at least one physical device associated with charging a battery. For example, the charging module 190 may include a charging circuit 191 associated with charging the battery. The charging module 190 may connect with the connection unit 181 through the power charging line 95. For example, the charging module 190 may be supplied a charging power, which is supplied from the charging device 200, through the power charging line 95 connected with the VBus terminal 84 of the connection unit 181, and may charge the battery using the supplied charging power. In this regard, the charging module 190 may supply the supplied charging power to the battery through the charging circuit 191. The charging circuit 191 may include at least one physical device for charging the battery with the supplied power. The charging circuit 191 may provide power to charge the battery with a certain voltage by having a specific state (e.g., charging setting) according to control of the charging control module 170.

The charging module 190 may connect to the charging control module 170 through a control line 75. The charging module 190 may adjust a setting of the charging circuit 191 according to control of the charging control module 170. For example, the charging module 190 may adjust a state of the charging circuit 191 according to control of the charging control module 170 and may charge the battery with current under a relatively high voltage (e.g., 9V) environment. Alternatively, the charging module 190 may adjust a state of the charging circuit 191 according to control of the charging control module 170 and may charge the battery with current under a low voltage (e.g., 5V) environment.

The above-mentioned charging module 190 may connect with the charging control module 170 through the interrupt signal line. When it is necessary for being controlled by the charging control module 170 or when there is information to be transmitted to the charging control module 170, the charging module 190 may provide an interrupt signal to the charging control module 170. Receiving the interrupt signal from the charging module 190, the charging control module 170 may verify a state of the charging module 190 and control the charging module 190 corresponding to the verified state of the charging module 190.

According to various embodiments of the present disclosure, the charging control module 170 may perform signaling, control, and the like associated with controlling charging of the electronic device 100. The charging control module 170 may be implemented with, for example, at least one processor (e.g., an application processor (AP) or a communication processor, and the like) for controlling devices of the electronic device 100. Alternatively, the charging control module 170 may be implemented with a software module associated with the corresponding processor.

The charging control module 170 may connect to the detection module 180 through the D+ signal line 72 and the D- signal line 73. According to an embodiment of the present disclosure, the charging control module 170 may communicate with the charging device 200 through a communication path including the D+ signal line 72, the D- signal line 73, the D+ connection line 92 and the D-connection line 93 of the detection module 180, and the D+ terminal 82 and the D-terminal 83 of the connection unit 181. The charging control module 170 may control the communication path to control initialization of the charging device 200. For example, the charging control module 170 may transmit a signal associated with initializing the charging device 200 to the charging device 200 through state control for short-circuiting the D+ terminal 82 or the D- terminal 83.

According to various embodiments of the present disclosure, the charging control module 170 may connect to the detection module 180 through the control line 74. According to various embodiments of the present disclosure, the charging control module 170 may transmit a message for requesting the detection module 180 to detect power of the connection unit 181 to the detection module 180, and may receive a detection signal of the detection module 180 through the control line 74. Alternatively, the charging control module 170 may receive a detection signal, which is detected at a certain period, through the control line 74. The charging control module 170 may transmit a control signal, for requesting the detection module 180 to short-circuit a D+ terminal and a D- terminal which are disposed in the detection module 180, to the detection module 180 through the control line 74 associated with initializing the charging device 200. In this regard, the detection module 180 may include a switch structure for short-circuiting the D+ terminal and the D- terminal or disconnecting the D+ terminal from the D- terminal.

According to various embodiments of the present disclosure, the charging control module 170 may connect to the charging module 190 through the control line 75. The charging control module 170 may verify a state of the charging module 190 through the control line 75. For example, the charging control module 170 may verify a charging circuit setting associated with charging power of the charging module 190 through the control line 75. When it is necessary for changing a setting of the charging circuit 191, the charging control module 170 may transmit a charging setting corresponding to the setting change to the charging module 190 through the control line 75. The charging control module 170 may verify whether setup (or setting) of the charging circuit 191 of the charging module 190 is completed. According to various embodiments of the present disclosure, the charging control module 170 may receive information about a charging state of the charging module 190 through the control line 75. The charging control module 170 may change a charging setting of the charging module 190 in response to the charging state of the charging module 190. According to an embodiment of the present disclosure, the charging control module 170 may transmit a stable battery charging setting, which is determined statistically or experimentally, to the charging module 190. Also, the charging control module 170 may transmit a charging setting, which is associated with fast charging, to the charging module 190. Also, when a charging error situation (e.g., an error in communication with the charging device 200, an abnormal power supplied from the charging device 200, and the like) occurs, the charging control module 170 may transmit a specified charging setting to the charging module 190.

The charging device 200 may include the connector 281 and a charging Integrated Circuit (IC) 270. The connector 281 may be implemented with a shape which may connect to the connection unit 181 installed in the electronic device 100. The connector 281 may include, for example, electrodes (e.g., a ground electrode, a D+ electrode, a D- electrode, and a VBus electrode) connected with the ground terminal 81, the D+ terminal 82, the D- terminal 83, and the VBus terminal 84 which are formed in the connection unit 181. The electrodes may connect with the charging IC 270 based on a ground line 21, a D+ line 22, a D- line 23, and a VBus line 24. The electrodes disposed in the connector 281 may be implemented with more various numbers or shapes according to purposes of the charging device 200.

The charging IC 270 may transmit power, which is supplied through a power line 11 connected with a commercial power supply, through the connector 281. In this regard, the charging IC 270 may supply power with a specific power level. According to various embodiments of the present disclosure, the charging IC 270 may communicate with the electronic device 100 through the D+ line 22 and the D- line 23. The charging IC 270 may receive a request for a charging power of a specific level from the electronic device 100. The charging IC 270 may generate the charging power corresponding to the received request and may supply the generated charging power to the electronic device 100 through the connector 281. The charging IC 270 may include a transformer circuit associated with generating the requested charging power.

According to various embodiments of the present disclosure, the charging IC 270 may store a charging table including charging power values which may be provided from the charging device 200. If the charging device 200 connects with the electronic device 100, the charging IC 270 may transmit the charging table to the electronic device 100. The charging IC 270 may receive a control signal associated with initialization from the electronic device 100. The charging IC 270 may be initialized according to the received control signal. For example, the charging IC 270 may have a state of supplying a specific charging power determined as default to the electronic device 100. For example, if the D+ signal line 72 and the D- signal line 73 which connect with the charging control module 170 are in a short circuit state, the charging IC 270 may be initialized.

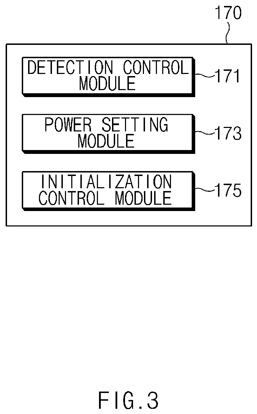

FIG. 3 is a block diagram illustrating a detailed configuration of a charging control module according to various embodiments of the present disclosure.

Referring to FIG. 3, a charging control module 170 may include a detection control module 171, a power setting module 173, and an initialization control module 175.

The detection control module 171 may receive a signal corresponding to connection of an external device through a connection unit 181 of FIG. 2. If the external device connects to the connection unit 181, the detection control module 171 may determine a type of the external device. For example, the detection control module 171 may transmit a specific signal to the external device using a communication path. The detection control module 171 may receive a response signal corresponding to the specific signal. The detection control module 171 may determine the external device as a charging device 200 of FIG. 2 (or a communication device and the like) based on the received response signal. According to an embodiment of the present disclosure, receiving a specific response signal from the charging device 200, the detection control module 171 may determine the charging device 200 as a fast charging device. If it is determined that the device connected to the connection unit 181 is the fast charging device, the detection control module 171 may transmit information about the connection of the fast charging device to the power setting module 173.

The detection control module 171 may verify a state of a detection module of FIG. 2 at certain periods, or may verify a state of the detection module 180 when receiving an interrupt signal from the detection module 180. For example, the detection control module 171 may receive a detection signal about a charging power from the detection module 180. The detection control module 171 may verify whether the received detection signal corresponds to a charging setting requested to the charging device 200. When the detection signal is identical to the charging setting requested to the charging device 200, the detection control module 171 may determine the current state as a normal charging state. When the detection signal is different from the charging setting requested to the charging device 200, the detection control module 171 may determine the current state as an abnormal operation state (e.g., an abnormal charging state). When an abnormal operation occurs, the detection control module 171 may transmit information corresponding to the abnormal operation to the power setting module 173 and the initialization control module 175.

According to various embodiments of the present disclosure, if the charging device 200 is inserted into an electronic device 100 of FIG. 2, the power setting module 173 may transmit a specified charging setting (e.g., a charging power value which may be stably charged statistically or experimentally when charging a battery) to a charging module 190 of FIG. 2. According to an embodiment of the present disclosure, the power setting module 173 may communicate with the charging device 200 to obtain a charging table of the charging device 200. The power setting module 173 may verify a charging setting which may be used to charge (e.g., fast charge) a battery based on the charging table. The power setting module 173 may transmit the charging setting to the charging module 190. Also, the power setting module 173 may transmit the charging setting to the charging device 200. Alternatively, if it is verified that setup of a charging circuit 191 of FIG. 2 is completed in response to the charging setting from the charging module 190, the power setting module 173 may transmit the charging setting to the charging device 200.

According to various embodiments of the present disclosure, the power setting module 173 may verify a current battery charging state. The power setting module 173 may determine whether it is necessary for fast charging a battery based on a predetermined battery charging rule and the current battery charging state. If it is determined that it is necessary for fast charging the battery, the power setting module 173 may transmit a charging setting corresponding to the fast charging to the charging module 190 or the charging device 200.

According to various embodiments of the present disclosure, the initialization control module 175 may verify whether an error occurs in communication between the electronic device 100 and the charging device 200. For example, when a signal received through a D+ signal line 72 and a D- signal line 73 of FIG. 2 is not a signal according to a specific protocol, or when a specific signal is not received during a specific time, the initialization control module 175 may determine it as an error in communication between the electronic device 100 and the charging device 200. Also, the initialization control module 175 may receive a signal about occurrence of an abnormal operation from the detection control module 171.

When an abnormal operation or a communication error occurs, the initialization control module 175 may initialize the detection module 180 or the charging module 190. For example, the initialization control module 175 may provide a charging setting (e.g., a minimum charging setting), which is preset associated with initialization, to the charging module 190. The initialization control module 175 may provide the minimum charging setting to the charging device 200. In this regard, after providing the minimum charging setting to the charging device 200, the initialization control module 175 may provide the minimum charging setting to the charging module 190. The initialization control module 175 may provide based on providing the minimum charging setting such that the charging module 190 sets a value associated with minimum charging.

According to various embodiments of the present disclosure, the initialization control module 175 may provide to control the detection module 180 to detect a specific state of the charging device 200. For example, the initialization control module 175 may control the detection module 180 such that a D+ terminal and a D- terminal of the detection module 180 are short-circuited. If a signal transmitted through a D+ line 22 of FIG. 2 replies through a D- line 23 of FIG. 2 due to a short circuit state in the D+ terminal and the D- terminal of the detection module 180, the charging device 200 may determine a reply result of the same signal as the transmitted signal as an initialization request signal. According to various embodiments of the present disclosure, the initialization control module 175 may transmit a reset signal associated with initialization of the charging device 200 to the charging device 200. The charging device 200 may be initialized in response to the reset signal received from the initialization control module 175. In this regard, the charging device 200 may further include a reset terminal.

According to various embodiments of the present disclosure, when an abnormal operation or a communication error occurs, the initialization control module 175 may control the charging circuit 191 of the charging module 190 to block a charging power.

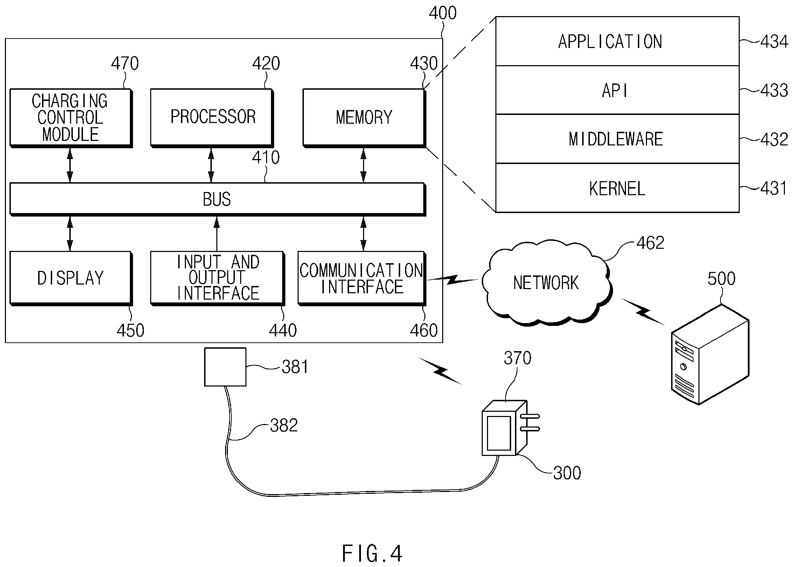

FIG. 4 is a block diagram illustrating an electronic device operation environment for controlling charging according to various embodiments of the present disclosure.

Referring to FIG. 4, an electronic device operation environment may include an electronic device 400 (e.g., an electronic device 100 of FIG. 1 or FIG. 2), a charging device 300 (e.g., a charging device 200 of FIG. 1 or FIG. 2), a network 462, and a server device 500.

The charging device 300 may connect with the electronic device 400 through a cable 382 and may supply a charging power to the electronic device 400. According to various embodiments of the present disclosure, the charging device 300 may include a local-area wireless communication module. For example, the charging device 300 may include a Bluetooth (BT) communication module, a Wi-Fi direct communication module, a Zigbee communication module, and the like. The charging device 300 may establish a wireless communication channel with the electronic device 400. The charging device 300 may transmit a charging table to the electronic device 400 through the wireless communication channel. The charging device 300 may receive a charging setting or an initialization request message from the electronic device 400 through the wireless communication channel. The charging device 300 may adjust a charging power in response to the received charging setting. Also, the charging device 300 may control its initialization in response to the received initialization request message. The above-mentioned charging device 300 may include, for example, a charging IC 370, the cable 382, and a connector 381.

The network 462 may establish a communication channel between the electronic device 400 and the server device 500. For example, the network 462 may provide to establish a cellular communication channel, a long term evolution (LTE) communication channel, and the like of the electronic device 400. The server device 500 may grant access of the electronic device 400 through the network 462 and may provide a specific server page to the electronic device 400. According to various embodiments of the present disclosure, the server device 500 may provide a charging table of the charging device 300 to the electronic device 400 in response to a request of the electronic device 400. According to an embodiment of the present disclosure, the electronic device 400 may transmit identification information for identifying the charging device 300 to the server device 500. The server device 500 may provide the charging table to the electronic device 400 in response to the received identification information.

The electronic device 400 may include a bus 410, a processor 420, a memory 430, an input and output interface 440, a display 450, a communication interface 460, and a charging control module 470.

The bus 410 may be a circuit which connects the above-mentioned components with each other and transmits information, for example, a control message, an input event, data, and the like between the above-mentioned components. For example, the bus 410 may transmit an input signal input from the input and output interface 440 to at least one of the processor 120 or the charging control module 470. For example, when the charging device 300 connects with the electronic device 400 through wireless communication, the bus 410 may transmit a signal associated with controlling the charging device 300 to the communication interface 460. Also, the bus 410 may transmit the charging table received through the communication interface 460 to the charging control module 470.

For example, the processor 420 may receive instructions from the above-mentioned other components (e.g., the memory 430, the input and output interface 440, the display 450, the communication interface 460, or the charging control module 470, and the like) through the bus 410. The processor 420 may decode the received instructions and may perform calculation or data processing according to the decoded instructions. For example, the processor 420 may be implemented with a device including the charging control module 470 or may be implemented with a device independent from the charging control module 470. When the processor 420 is implemented with the device independent from the charging control module 470, it may be implemented with a device which communicates with the charging control module 470 based on the bus 410 or directly. The processor 420 may provide to process signals associated with communicating with the charging device 300 and to process signals associated with controlling the charging device 300 (e.g., initializing the charging device 300 or adjusting a charging setting of the charging device 300).

The memory 430 may store instructions or data which are received from the processor 420 or other components (e.g., the input and output interface 440, the display 450, the communication interface 460, or the charging control module 470, and the like) or are generated by the processor 120 or the other components. The memory 430 may include programming modules, such as a kernel 431, a middleware 432, an application programming interface (API) 433, or an application 434, and the like. The above-mentioned respective programming modules may be configured with software, firmware, hardware, or at least two or more combinations thereof.

The kernel 431 may control or manage system resources (e.g., the bus 410, the processor 420, or the memory 430, and the like) used to execute an operation or function implemented in the other programming modules, for example, the middleware 432, the API 433, or the application 434. Also, the kernel 431 may provide an interface which may be controlled or managed in the middleware 432, the API 433, or the application 434 associated with controlling the charging device 300.

The middleware 432 may play a role as a go-between such that the API 433 or the application 434 communicates with the kernel 431 and transmits and receives data. Also, the middleware 432 may perform control (e.g., scheduling or load balancing) with respect to work requests using a method of assigning priority which may use system resources (the bus 410, the processor 420, or the memory 430, and the like) of the electronic device 400 to, for example, at least one of the application 434, associated with the work requests received from the application 434.

The API 133 may be an interface in which the application 434 controls a function provided from the kernel 431 or the middleware 432. For example, the API 433 may include at least one interface or function (e.g., instruction) for file control, window control, image processing, or text control, and the like. According to various embodiments of the present disclosure, the API 433 may include an interface or function associated with controlling the charging device 300.

The applications 434 may include at least one application associated with operating the electronic device 400. For example, the application 434 may include applications associated with a camera function, a music play function, a video play function, a communication function, a recording function, a game function, and the like. According to various embodiments of the present disclosure, the application 434 may include an application about controlling the charging device 300 associated with fast charging. The corresponding application 434 may be activated according to control of the charging control module 470. The application 434 may perform processing (e.g., processing associated with collecting a charging table, processing associated with operate the collected charging table, processing associated with initializing the charging device 300, and the like) associated with controlling the charging device 300.

The input and output interface 440 may transmit instructions or data input from a user through an input and output device (e.g., a sensor, a keyboard, or a touch screen) to, for example, the processor 420, the memory 430, the communication interface 460, or the charging control module 470 through the bus 110. According to various embodiments of the present disclosure, the input and output interface 440 may include at least one of a connection unit 181 of FIG. 2, a detection module 180 associated with detecting a state of the connection unit 181, and a charging module 190 which charges a battery with a charging power supplied through the connection unit 181, associated with connecting to the charging device 300.

According to various embodiments of the present disclosure, the input and output interface 440 may perform a function associated with processing audio. In this regard, the input and output interface 440 may include at least one of a speaker or a microphone as a single thing or a plurality of things. The input and output interface 440 may output an alarm according to insertion of the charging device 300, a fast charging guide by the charging device 300, an alarm for a charging state of a battery, and the like as specific audio data.

The display 450 may display a variety of information (e.g., multimedia data, or text data, and the like). For example, the display 450 may output a lock screen, a waiting screen, and the like. The display 150 may output screens for performing specific functions, for example, a screen for reproducing sound sources, a screen for reproducing video, a screen for receiving broadcasting, and the like in response to functions. The display 450 may include a display panel for outputting screens and a touch panel for supporting a touch function.

According to an embodiment of the present disclosure, the display 450 may output information associated with a connection state of the charging device 300 and information associated with releasing connection of the charging device 300. Also, the display 450 may output information associated with fast charging or general charging by the charging device 300. The display 450 may output information about occurrence of an abnormal operation or information about occurrence of an error in communication with the charging device. The display 450 may output information associated with initializing the charging device 300 and information about a charging setting of the charging module 190.

The communication interface 460 may connect with the network 462 through wireless communication or wired communication and may communicate with an external device. The wireless communication may include at least one of, for example, Wi-Fi communication, BT communication, near field communication (NFC), or cellular communication (e.g., LTE, LTE-advanced (LTE-A), code division multiple access (CDMA), wideband CDMA (WCDMA), universal mobile telecommunications system (UMTS), wireless broadband (WiBro), or global system for mobile communications (GSM), and the like). The wired communication may include at least one of, for example, a universal serial bus (USB), a high definition multimedia interface (HDMI), a recommended standard 232 (RS-232), or a plain old telephone service (POTS).

According to an embodiment of the present disclosure, when the charging device 300 is implemented with a device which may perform local-area wireless communication, the communication interface 460 may establish a communication channel with the charging device 300. The communication interface 460 may transmit and receive data associated with setting charging of the charging device 300 in response to control of the charging control module 470. According to various embodiments of the present disclosure, the communication interface 460 may transmit information for requesting initialization of the charging device 300 to the charging device 300 according to control of the charging control module 470.

The charging control module 470 may be a charging control module 170 of FIG. 2. The charging control module 470 may control the detection module 180 and the charging module 190 of FIG. 2 to change a charging setting of the charging device 300 and such that the charging module 190 is changed to a state where it may process the changed charging setting. This charging control module 470 may support a function for detecting abnormal stop in a charging operation, a function for setting a stable default voltage/current between the electronic device 400 and the charging device 300, and a function for performing initialization when an error operation occurs between the electronic device 400 and the charging device 300. According to an embodiment of the present disclosure, the charging control module 470 may include at least one processor 420 or may be formed by at least one processor 420.

According to an embodiment of the present disclosure, when a specific situation (e.g., failure during communication with the charging device 300, a state where communication is not completed within a specific time, or an abnormal operation such as the lockup of the processor 420 (e.g., an AP), and the like) occurs, the charging control module 470 may play a role in restoring each of states of the electronic device 400 and the charging device 300 to a normal state while controlling rebooting of the electronic device 400. Also, after communication between the charging device 300 and the electronic device 400, which is associated with fast charging, is normally completed, when an output voltage of the charging device 300 is not supplied as a set value, the charging control module 470 may control setup of voltage/current which is preset statistically or experimentally to secure a stable charging operation.

According to various embodiments of the present disclosure, when an abnormal operation state occurs associated with charging, the charging control module 470 may initialize the electronic device 400 and the charging device 300 with a stable default voltage/current which is previously defined to prevent an error operation of the electronic device 400. Herein, the abnormal operation state may include, for example, a state where communication is not completed normally, a state where communication is completed but voltage is not set normally to a voltage level determined by the communication, a state where it may not be verified whether mutual communication between the charging device 300 and the electronic device 400 is performed, and the like. In this regard, the charging control module 470 may control the connection unit 181 to ground a D+ terminal 82 and a D- terminal 83 of the connection unit 181 of FIG. 2 or at least one line connected with these terminals during a certain time and such that the D+ terminal 82 and the D- terminal 83 are in a short-circuit state. The charging control module 470 may initialize the charging device 300 through the control of the connection unit 181. Alternatively, the charging control module 470 may initialize the electronic device 400 such that a voltage of the D- terminal 83 is changed to a specific value. Alternatively, the charging control module 470 may set a reset register disposed in the charging device 300 or may set a reset register disposed in a module (e.g., the detection module 180) associated with when the electronic device 400 recognizes the charging device 300, and may initialize at least one of the charging device 300 or the electronic device 400. According to various embodiments of the present disclosure, when an abnormal operation occurs associated with a charging operation, the charging control module 470 may initialize at least one of the detection module 180 or the charging module 190.

As described above, according to various embodiments of the present disclosure, the electronic device may include the input and output interface for providing support to connect to the charging device and the charging control module for controlling initialization of the charging device when an abnormal charging operation of the charging device is detected or initializing a communication interface with the charging device.

According to various embodiments of the present disclosure, the electronic device may include the memory for storing at least one instruction for performing a processing operation associated with an abnormal charging operation of the charging device connected thereto and the charging control module connected to the memory. The charging control module may control initialization of the charging device when an abnormal charging operation of the connected charging device is detected or may initialize the communication interface with the charging device.

According to various embodiments of the present disclosure, before communication with the charging device is completed, the charging control module may adjust a charging circuit setting, which is associated with charging, to a specified charging setting.

According to various embodiments of the present disclosure, when an error occurs during communication with the charging device, the charging control module may control the initialization.

According to various embodiments of the present disclosure, the input and output interface may include a detection module for detecting a charging power which is different from a specified charging setting requested to the charging device.

According to various embodiments of the present disclosure, the charging control module may select a specified charging setting from a charging table received from the charging device and may request the charging device to supply a charging power corresponding to the selected charging setting.

According to various embodiments of the present disclosure, the charging control module may short-circuit signal lines connected with the charging device associated with performing the initialization.

According to various embodiments of the present disclosure, the charging control module may transmit a signal, for adjusting a value of a reset register disposed in the charging device to an initialization value, to the charging device associated with performing the initialization.

According to various embodiments of the present disclosure, when the charging device connects to the electronic device while booting (or bootstrap) the electronic device, the charging control module may initialize the charging device or the input and output interface.

According to various embodiments of the present disclosure, the charging control module may adjust a voltage of the specific signal line connected with the charging device to a specific value associated with performing the initialization.

According to various embodiments of the present disclosure, the charging control module may adjust a charging circuit setting, which is associated with charging, to a specific initialization charging setting associated with performing the initialization.

According to various embodiments of the present disclosure, the charging control module may control output of at least one of information about occurrence of the abnormal operation or information about an estimated time to fully charge a battery of the electronic device according to the occurrence of the abnormal operation.

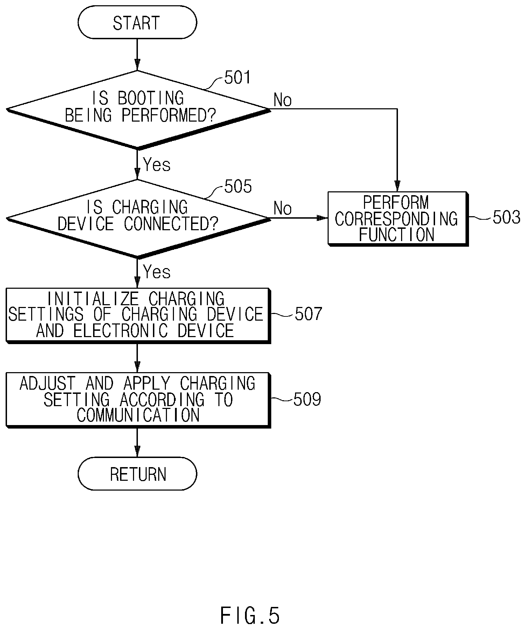

FIG. 5 is a flowchart illustrating a charging control method of an electronic device according to various embodiments of the present disclosure.

Referring to FIG. 5, in a charging control method of a charging device 200 of FIG. 2, in operation 501, a charging control module 170 of the electronic device 100 (or an electronic device 400 of FIG. 4, hereinafter, a description will be given of the electronic device 100 as an example) may determine whether booting is being performed in the electronic device 100. When the booting is completed, the charging control module 170 may branch to operation 503 and may perform a function according to schedule information or an input event. For example, after the booting is completed, the charging control module 170 may control a display (e.g., a display 450 of FIG. 4) to output a home screen or a waiting screen. The charging control module 170 may detect the remaining capacity of a battery and may control the display to display the remaining capacity of the battery.

When the booting is being performed, in operation 505, the charging control module 170 may determine whether a charging device 200 of FIG. 2 (or a charging device 300 of FIG. 4, hereinafter, a description will be given of the charging device 200 as an example) connects to the electronic device 100. When the charging device 200 does not connect to the electronic device 100, the charging control module 170 may branch to operation 503 and may provide to perform a function according to schedule information or an input event.

When the charging device 200 connects to the electronic device 100, in operation 507, the charging control module 170 may control initialization of charging settings of the charging device 200 and the electronic device 100. For example, the charging control module 170 may control a connection unit 181 of FIG. 2 such that a D+ terminal 82 and a D- terminal 83 of the connection unit 181 are in a short circuit state, and may initialize the charging device 200 (e.g., the charging device 200 is designed to be initialized when the D+ terminal 82 and the D- terminal 83 are recognized as a short circuit state). Alternatively, the charging control module 170 may adjust a reset register value of the charging device 200 and may control a charging IC 270 of FIG. 2 to initialize the charging device 200. When the charging device 200 is initialized, it may supply a charging power based on a specified charging setting (e.g., a minimum voltage/current value) which is automatically determined. According to various embodiments of the present disclosure, the charging control module 170 may control initialization of at least one of a detection module 180 or a charging module 190 of FIG. 2. For example, the charging control module 170 may control a charging circuit 191 of the charging module 190 to have a specified charging setting (e.g., a state value set to process a minimum voltage/current value).

After the initialization is completed, in operation 509, the charging control module 170 may adjust and apply a charging setting according to communication. For example, the charging control module 170 may communicate with the charging device 200 and may receive a charging table from the charging device 200. The charging control module 170 may select a charging setting necessary for fast charging a battery of the electronic device 100 among values stored in the received charging table and may transmit the selected charging setting to the charging device 200. Also, the charging control module 170 may transmit the selected charging setting to the charging module 190 to have a circuit state where the charging module 190 may process a charging power supplied from the charging device 200.

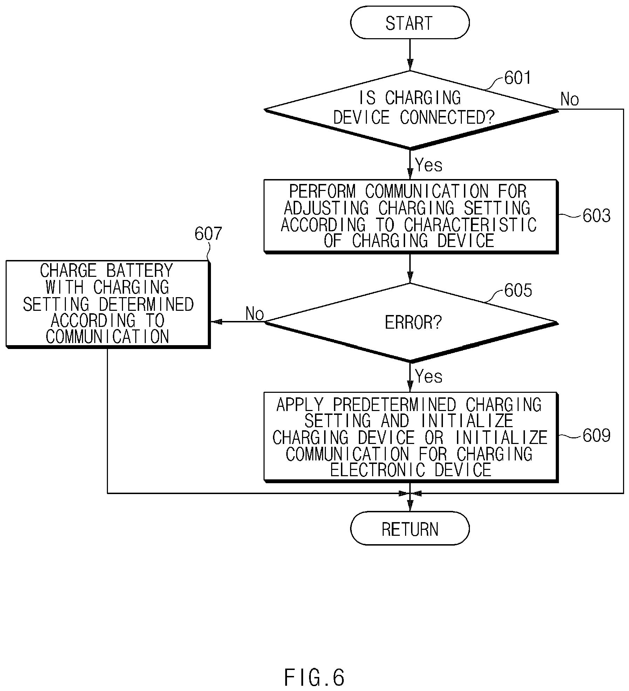

FIG. 6 is a flowchart illustrating a method of processing an error in charging an electronic device according to various embodiments of the present disclosure.

Referring to FIG. 6, in processing a charging error of an electronic device 100 of FIG. 2, in operation 601, a charging control module 170 of FIG. 2 may determine whether the electronic device 100 connects with a charging device 200 of FIG. 2. When the electronic device 100 does not connect with the charging device 200, the charging control module 170 may perform the same operation as operation 503 of FIG. 5. For example, the charging control module 170 may provide to perform a specific function of the electronic device 100 according to set schedule information or an input event. For example, the charging control module 170 may verify a remaining capacity state of a battery and may control display of the verified state. Alternatively, the charging control module 170 may output a guide message for requesting charging or a message for guiding a low-power state, and the like according to the remaining capacity of the battery.

When the electronic device 100 connects with the charging device 200, operation 603, the charging control module 170 may perform communication for adjusting a charging setting according to a characteristic of the charging device 200. For example, the charging control module 170 may transmit a specific signal to the charging device 200 and may receive a charging table from the charging device 200. Also, the charging control module 170 may transmit a specified charging setting to the charging device 200.

In operation 605, the charging control module 170 may determine whether an error occurs. For example, the charging control module 170 may determine whether there is an error such as not receiving a response corresponding to a request (e.g., not receiving a charging table) in the process of communicating with the charging device 200 or not receiving acknowledge to a setup request according to a charging setting of the charging device 200. Alternatively, when there is an error such as not supplying voltage according to a specified charging setting to the charging device 200, the charging control module 170 may verify the error based on a detection module 180 of FIG. 2.

When an error does not occur in operation 605, in operation 607, the charging control module 170 may control a charging module 190 of FIG. 2 to charge a battery with a charging setting determined according to communication. For example, the charging control module 170 may transmit the determined charging setting to the charging module 190 such that a charging circuit 191 of the charging module 190 is in a circuit state where it may process the corresponding charging setting. According to an embodiment of the present disclosure, the charging control module 170 may request the charging module 190 to process a charging setting, for example, a charging power of 9V 1.65A associated with fast charging. The charging setting associated with the fast charging may be changed to various values according to a type of the electronic device 100 and a type of the charging device 200.

When the error occurs, in operation 609, the charging control module 170 may apply a specified charging setting, and may initialize the charging device or may initialize an input and output interface associated with charging the electronic device 100. The charging control module 170 may control the charging module 190 to process a charging setting (e.g., a stable charging setting which is obtained experimentally), for example, a charging power of 5V 1.8A. Alternatively, the charging control module 170 may control the charging module 190 to be set to a specified charging setting (e.g., a minimum voltage/current value, for example, 4.2V 1A) which may be supplied from the charging device 200. The above-mentioned minimum voltage/current value may be changed according to a characteristic of the charging device 200. Also, the above-mentioned stable charging setting which is obtained experimentally may be also changed according to a type of the electronic device 100.

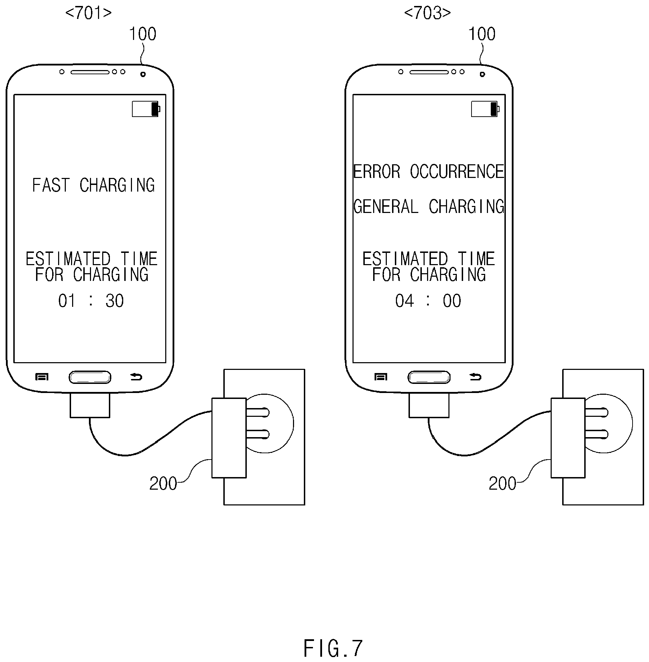

FIG. 7 is a drawing illustrating screens of an electronic device associated with controlling charging according to various embodiments of the present disclosure.

Referring to FIG. 7, according to various embodiments of the present disclosure, when a charging device 200 of FIG. 2 (a charging device 300 of FIG. 4) is connected to an electronic device 100 of FIG. 2 (or an electronic device 400 of FIG. 4), the electronic device 100 may communicate with the charging device 200. For example, the electronic device 100 may transmit a specific signal to the charging device 200 through signal lines connected with a D+ terminal 82 and a D- terminal 83 of FIG. 2. If a specific response signal is received from the charging device 200, the electronic device 100 may recognize the charging device 200 as a fast charging device. The electronic device 100 may receive a charging table from the charging device 200. The electronic device 100 may select a charging setting, which may be applied to fast charging a battery, from the charging table. The electronic device 100 may transmit the selected charging setting to the charging device 200. In this process, the electronic device 100 may perform circuit setup associated with processing a charging power corresponding to the selected charging setting.

In the above-mentioned process, when the charging device 200 is the fast charging device, the electronic device 100 may output information about a guide to insertion of the charging device 200 on a state screen 701. The electronic device 100 may calculate time required to fully charge a battery in response to the selected charging setting. As shown in FIG. 7, the electronic device 100 may output the estimated time to fully charging the battery

According to various embodiments of the present disclosure, when an error occurs in a process of communicating with the charging device 200, or after a charging setting is determined according to the completion of communication, the electronic device 100 may determine whether the charging device 200 supplies a charging power corresponding to the selected charging setting. When the error occurs in the above-mentioned process, the electronic device 100 may output information about the occurrence of the error associated with fast charging on a state screen 703. Also, the electronic device 100 may initialize the charging device 200 associated with fast charging or may initialize an input and output interface (at least one of a connection unit 181, a charging control module 170, a detection module 180, or a charging module 190 of FIG. 2) connected with the charging device 200. Thereafter, the electronic device 100 may communicate with the charging device 200 again, and may perform the procedure associated with processing fast charging again. When an error occurs by the specific number of times or more (e.g., including initial one time according to setup), the electronic device 100 may control the charging module 190 to perform setup associated with general charging. For example, the electronic device 100 may select a stable charging setting (e.g., a charging setting which is stably set experimentally or according to specific information) associated with charging a battery among charging settings which may be supplied from the charging device 200, and may transmit the selected charging setting to the charging device 200. The charging module 190 may set a charging circuit 191 of FIG. 2 in response to the selection of the stable charging setting.

According to various embodiments of the present disclosure, the electronic device 100 may request the charging device 200 to transmit a charging setting corresponding to a minimum voltage/current which may be supplied from the charging device 200, and may control the charging circuit 191 of the charging module 190 to be set in response to the requested charging setting. The electronic device 100 may calculate time required to fully charge a battery in response to the charging setting, and, as shown in FIG. 7, may output the calculated time on a display.

According to various embodiments of the present disclosure, the electronic device may prevent its damage or its error operation, and the like while fast charging its battery.

According to various embodiments of the present disclosure, the charging control method of the electronic device may include communicating the charging device connected to the electronic device, detecting an abnormal charging operation of the charging device, and when the abnormal charging operation is detected, controlling initialization of the charging device or initializing the input and output interface connected with the charging device.

According to various embodiments of the present disclosure, before communication with the charging device is completed, the charging control method may further include adjusting a charging circuit setting, which is associated with charging, to a specified charging setting.

According to various embodiments of the present disclosure, the detecting of the abnormal charging operation may include detecting an error during communication with the charging device.

According to various embodiments of the present disclosure, the detecting of the abnormal charging operation may include detecting a charging power which is different from a specified charging setting requested to the charging device.

According to various embodiments of the present disclosure, the charging control method may further include receiving a charging table from the charging device, selecting a specified charging setting from the charging table, and requesting the charging device to supply a charging power according to the selected specified charging setting.

According to various embodiments of the present disclosure, the initializing of the input and output interface may include short-circuiting signal lines connected with the charging device.

According to various embodiments of the present disclosure, the initializing of the input and output interface may include transmitting a signal, for adjusting a value of a reset register disposed in the charging device to an initialization value, to the charging device.

According to various embodiments of the present disclosure, the initializing of the input and output interface may include adjusting a voltage of a specific signal line connected with the charging device to a specific value.

According to various embodiments of the present disclosure, the initializing of the input and output interface may include adjusting a charging circuit setting, which is associated with charging, to a specific initialization charging setting.

According to various embodiments of the present disclosure, the charging control method may further include outputting at least one of information about the occurrence of the abnormal charging operation or information about an estimated time to fully charge a battery of the electronic device according to the occurrence of the abnormal charging operation.

According to various embodiments of the present disclosure, when the charging device connects to the electronic device while booting the electronic device, the charging control method may further include initializing at least one of the charging device or an input and output interface of the electronic device, which is associated with charging.

The term "module" used herein may represent, for example, a unit including one or more combinations of hardware, software and firmware. The term "module" may be interchangeably used with the terms "unit", "logic", "logical block", "component" and "circuit". The "module" may be a minimum unit of an integrated component or may be a part thereof. The "module" may be a minimum unit for performing one or more functions or a part thereof.

According to various embodiments, at least a portion of an apparatus (e.g., modules or functions thereof) or a method (e.g., operations) according to various embodiments of the present disclosure, for example, may be implemented by instructions stored in a non-transitory computer-readable storage media in the form of a programmable module. The instruction, when executed by one or more processors, may perform a function corresponding to the instruction.

A non-transitory computer-readable recording medium may include a hard disk, a magnetic media such as a floppy disk and a magnetic tape, an optical media such as compact disc Read Only Memory (CD-ROM) and a digital versatile disc (DVD), a magneto-optical media such as a floptical disk, and the following hardware devices specifically configured to store and perform a program instruction (e.g., a programming module): ROM, Random Access Memory (RAM), and a flash memory. Also, a program instruction may include not only a mechanical code such as things generated by a compiler but also a high-level language code executable on a computer using an interpreter. The above hardware unit may be configured to operate via one or more software modules for performing an operation of the present disclosure, and vice versa.

According to various embodiments of the present disclosure, in a non-transitory computer-readable storage media which store instructions, the instructions may be set to allow at least one processor to execute at least one operation when they are executed by the at least one processor. The at least one operation may include communicating with the charging device connected to the electronic device, detecting an abnormal charging operation of the charging device, and controlling initialization of the charging device or initializing the input and output interface connected with the charging device when the abnormal charging operation occurs. According to various embodiments of the present disclosure, in a non-transitory computer-readable storage media, the non-transitory computer-readable storage media may include instructions which are set to be executed by at least one processor. The instructions may include at least one of an instruction set to detect an abnormal charging operation of the charging device connected to the electronic device, an instruction set to initialize the changing device when the abnormal charging operation is detected, or an instruction set to initialize a communication interface with the charging device.

While the present disclosure has been shown and described with reference to various embodiments thereof, it will be understood by those skilled in the art that various changes in form and details may be made therein without departing from the scope of the present disclosure as defined by the appended claims and their equivalents.

## Claims

1. A charging control method of an electronic device (100), the charging control method comprising:
establishing a communication channel with an external charging device (200) connected to the electronic device (100);
detecting an abnormal charging operation of the external charging device (200) comprising at least one of detecting an error during communication with the external charging device (200), and detecting a charging power that is different from a charging setting requested to the external charging device (200);
initializing the external charging device (200) or an input and output interface of the electronic device (100) connected with the external charging device (200) in response to the abnormal charging operation;
receiving a charging table from the external charging device (200) through a wireless communication channel;
selecting a charging setting from the charging table; and
requesting the external charging device (200) to supply a charging power in response to the selected charging setting.

2. The charging control method of claim 1, further comprising:
adjusting a charging circuit setting associated with charging to a specified charging setting before communication with the external charging device (200) is completed.

3. The charging control method of claim 1, further comprising:
initializing at least one of the external charging device (200) or a communication interface if the external charging device (200) connects to the electronic device (100) while booting the electronic device (100).

4. The charging control method of claim 1, wherein the initializing of the input and output interface of the electronic device (100) comprises one of:
short-circuiting signal lines connected with the external charging device (200);
transmitting a signal, for adjusting a value of a reset register disposed in the charging device to an initialization value, to the external charging device (200);
adjusting a voltage of a signal line connected with the external charging device (200) to a predetermined value; or
adjusting a charging circuit setting associated with charging to an initialization charging setting.

5. The charging control method of claim 1, further comprising:
outputting at least one of information about occurrence of the abnormal charging operation or information about an estimated time to fully charge a battery of the electronic device (100) in response to the occurrence of the abnormal charging operation.

6. An electronic device (100) comprising:
an input and output interface (440) configured to provide a connection to an external charging device (200); and
a processor (420) configured to detect an abnormal charging operation of the external charging device (200), and to control initialization of the external charging device (200) or the input and output interface (440) in response to an abnormal charging operation of the connected external charging device (200), wherein the processor (420) is configured to select a charging setting from a charging table received from the external charging device (200) through a wireless communication channel, and to request the external charging device (200) to supply a charging power in response to the selected charging setting.

7. The electronic device (100) of claim 6, wherein before communication with the external charging device (200) is completed, the processor (420) is configured to adjust a charging circuit setting associated with charging to a specified charging setting.

8. The electronic device (100) of claim 6, wherein when an error occurs during communication with the external charging device (200), the processor (420)is configured to control the initialization.

9. The electronic device (100) of claim 6, wherein the input and output interface comprises a detection module configured to detect a charging power that is different from a charging setting requested to the external charging device (200).

10. The electronic device (100) of claim 6, wherein the processor (420) is configured to control to short-circuit signal lines connected with the external charging device (200) associated with performing the initialization and to transmit a signal, for adjusting a value of a reset register disposed in the external charging device (200) to an initialization value, to the external charging device (200) associated with performing the initialization.

11. The electronic device (100) of claim 6, wherein the processor (420) is configured to control to initialize at least one of the external charging device (200) or the input and output interface if the external charging device (200) connects to the electronic device (100) while booting the electronic device (100);
adjust a voltage of a signal line connected with the external charging device (200) to a predetermined value associated with performing the initialization; or
adjust a charging circuit setting associated with charging to an initialization charging setting associated with performing the initialization.

12. The electronic device (100) of claim 6, wherein the processor (420) is configured to control output of at least one of information about occurrence of the abnormal charging operation or information about an estimated time to fully charge a battery of the electronic device (100) in response to the occurrence of the abnormal charging operation.

## Patentansprüche

1. Ladesteuerungsverfahren einer elektronischen Vorrichtung (100), wobei das Ladesteuerungsverfahren Folgendes umfasst:
Herstellen eines Kommunikationskanals mit einer externen Ladevorrichtung (200), die mit der elektronischen Vorrichtung (100) verbunden ist;
Erfassen eines anormalen Ladevorgangs der externen Ladevorrichtung (200), umfassend mindestens eines von dem Erfassen eines Fehlers während der Kommunikation mit der externen Ladevorrichtung (200) und dem Erfassen eines Ladestroms, der sich von der von der externen Ladevorrichtung (200) angeforderten Ladeeinstellung unterscheidet;
Initialisieren der externen Ladevorrichtung (200) oder einer Eingabe- und Ausgabeschnittstelle der elektronischen Vorrichtung (100), die mit der externen Ladevorrichtung (200) verbunden ist, als Reaktion auf den anormalen Ladevorgang;
Empfangen einer Ladetabelle von der externen Ladevorrichtung (200) durch einen kabellosen Kommunikationskanal;
Auswählen einer Ladeeinstellung aus der Ladetabelle; und
Auffordern der externen Ladevorrichtung (200), einen Ladestrom zu liefern, als Reaktion auf die ausgewählte Ladeeinstellung.

2. Ladesteuerungsverfahren nach Anspruch 1, das ferner Folgendes umfasst:
Anpassen einer dem Laden zugeordneten Ladeschaltungseinstellung an eine bestimmte Ladeeinstellung, bevor die Kommunikation mit der externen Ladevorrichtung (200) abgeschlossen ist.

3. Ladesteuerungsverfahren nach Anspruch 1, das ferner Folgendes umfasst:
Initialisieren mindestens eines der externen Ladevorrichtung (200) oder einer Kommunikationsschnittstelle, falls sich die externe Ladevorrichtung (200) mit der elektronischen Vorrichtung (100) während des Starts der elektronischen Vorrichtung (100) verbindet.

4. Ladesteuerungsverfahren nach Anspruch 1, wobei das Initialisieren der Eingabe- und Ausgabeschnittstelle der elektronischen Vorrichtung (100) eines umfasst von:
Kurzschlusssignalleitungen, die mit der externen Ladevorrichtung (200) verbunden sind;
Übertragen eines Signals, zum Anpassen eines Werts eines in der Ladevorrichtung angeordneten Rücksetzverzeichnisses an einen Initialisierungswert, an die externe Ladevorrichtung (200);
Anpassen einer Spannung einer Signalleitung, die mit der externen Ladevorrichtung (200) verbunden ist, an einen vorbestimmten Wert; oder
Anpassen einer dem Laden zugeordneten Ladeschaltungseinstellung an eine Initialisierungsladeeinstellung.

5. Ladesteuerungsverfahren nach Anspruch 1, das ferner Folgendes umfasst:
Ausgeben mindestens einer der Information über das Auftreten des anormalen Ladevorgangs oder der Information über eine geschätzte Zeit, um eine Batterie der elektronischen Vorrichtung (100) vollständig zu laden, als Reaktion auf das Auftreten des anormalen Ladevorgangs.

6. Elektronische Vorrichtung (100), die Folgendes umfasst:
eine Eingabe- und Ausgabeschnittstelle (440), die konfiguriert ist, um eine Verbindung mit einer externen Ladevorrichtung (200) bereitzustellen; und
eine Verarbeitungseinheit (420), die konfiguriert ist, um einen anormalen Ladevorgang der externen Ladevorrichtung (200) zu erfassen und um die Initialisierung der externen Ladevorrichtung (200) oder der Eingabe- und Ausgabeschnittstelle (440) als Reaktion auf einen anormalen Ladevorgang der verbundenen externen Ladevorrichtung (200) zu steuern; wobei die Verarbeitungseinheit (420) konfiguriert ist, um eine Ladeeinstellung aus einer Ladetabelle auszuwählen, die von der externen Ladevorrichtung (200) über einen kabellosen Kommunikationskanal empfangen wurde, und um die externe Ladevorrichtung (200) als Reaktion auf die ausgewählte Ladeeinstellung aufzufordern, einen Ladestrom zu liefern.

7. Elektronische Vorrichtung (100) nach Anspruch 6, wobei, bevor die Kommunikation mit der externen Ladevorrichtung (200) abgeschlossen ist, die Verarbeitungseinheit (420) konfiguriert ist, um eine dem Laden zugeordnete Ladeschaltungseinstellung an eine bestimmte Ladeeinstellung anzupassen.

8. Elektronische Vorrichtung (100) nach Anspruch 6, wobei, wenn während der Kommunikation mit der externen Ladevorrichtung (200) ein Fehler auftritt, die Verarbeitungseinheit (420) konfiguriert ist, um die Initialisierung zu steuern.

9. Elektronische Vorrichtung (100) nach Anspruch 6, wobei die Eingabe- und Ausgabeschnittstelle ein Erfassungsmodul beinhaltet, das konfiguriert ist, um einen Ladestrom zu erfassen, der sich von einer von der externen Ladevorrichtung (200) angeforderten Ladeeinstellung unterscheidet.

10. Elektronische Vorrichtung (100) nach Anspruch 6, wobei die Verarbeitungseinheit (420) konfiguriert ist, um so gesteuert zu werden, dass sie Signalleitungen kurzschließt, die mit der der Durchführung der Initialisierung zugeordneten externen Ladevorrichtung (200) verbunden ist, und um, zum Anpassen eines Werts eines in der externen Ladevorrichtung (200) angeordneten Rücksetzverzeichnisses an einen Initialisierungswerts, ein Signal an die der Durchführung der Initialisierung zugeordneten externen Ladevorrichtung (200) zu übertragen.

11. Elektronische Vorrichtung (100) nach Anspruch 6, wobei die Verarbeitungseinheit (420) konfiguriert ist, um so gesteuert zu werden, dass sie mindestens eine der externen Ladevorrichtung (200) oder der Eingabe- und Ausgabeschnittstelle initialisiert, wenn die externe Ladevorrichtung (200) sich mit der elektronischen Vorrichtung (100) während des Starts der elektronischen Vorrichtung (100) verbindet;
Anpassen einer Spannung einer Signalleitung, die mit der externen Ladevorrichtung (200) verbunden ist, an einen dem Durchführen der Initialisierung zugeordneten vorbestimmten Wert; oder
Anpassen einer dem Laden zugeordneten Ladeschaltungseinstellung an eine dem Durchführen der Initialisierung zugeordnete Initialisierungsladeeinstellung.

12. Elektronische Vorrichtung (100) nach Anspruch 6, wobei die Verarbeitungseinheit (420) konfiguriert ist, um die Ausgabe der mindestens einen der Information über das Auftreten des anormalen Ladevorgangs oder der Information über eine geschätzte Zeit, um eine Batterie der elektronischen Vorrichtung (100) vollständig zu laden, als Reaktion auf das Auftreten des anormalen Ladevorgangs zu steuern.

## Revendications

1. Procédé de commande de charge d'un dispositif électronique (100), ledit procédé de commande de charge comprenant :
l'établissement d'un canal de communication avec un dispositif de charge externe (200) branché au dispositif électronique (100) ;
la détection d'une opération de charge anormale du dispositif de charge externe (200) comprenant au moins un parmi la détection d'une erreur durant la communication avec le dispositif de charge externe (200) et la détection d'une puissance de charge qui est différente d'un paramètre de charge demandé au dispositif de charge externe (200) ;
l'initialisation du dispositif de charge externe (200) ou d'une interface d'entrée et de sortie du dispositif électronique (100) branché au dispositif de charge externe (200) en réponse à l'opération de charge anormale ;
la réception d'une table de charge provenant du dispositif de charge externe (200) par l'intermédiaire d'un canal de communication sans fil ;
la sélection d'un paramètre de charge à partir de la table de charge ; et
la demande au dispositif de charge externe (200) de délivrer une puissance de charge en réponse au paramètre de charge sélectionnée.

2. Procédé de commande de charge selon la revendication 1, comprenant en outre :
le réglage d'un paramètre de circuit de charge associé à la charge par rapport au paramètre de charge spécifié avant que la communication avec le dispositif de charge externe (200) ne soit terminée.

3. Procédé de commande de charge selon la revendication 1, comprenant en outre :
l'initialisation d'au moins un parmi le dispositif de charge externe (200) ou une interface de communication si le dispositif de charge externe (200) se branche au dispositif électronique (100) tout en amorçant le dispositif électronique (100).

4. Procédé de commande de charge selon la revendication 1, ladite initialisation de l'interface d'entrée et de sortie du dispositif électronique (100) comprenant un parmi :
le court-circuitage des lignes de signaux branchées au dispositif de charge externe (200) ;
la transmission d'un signal, permettant de régler une valeur d'un registre de réinitialisation disposé dans le dispositif de charge par rapport à une valeur d'initialisation, au dispositif de charge externe (200) ;
le réglage d'une tension d'une ligne de signaux branchée au dispositif de charge externe (200) par rapport à une valeur prédéfinie ; ou
le réglage d'un paramètre de circuit de charge associé à la charge par rapport à un paramètre de charge d'initialisation.

5. Procédé de commande de charge selon la revendication 1, comprenant en outre :
la sortie d'au moins un parmi des informations concernant la survenue de l'opération de charge anormale ou des informations concernant un temps estimé pour charger complètement une batterie du dispositif électronique (100) en réponse à la survenue de l'opération de charge anormale.

6. Dispositif électronique (100) comprenant :
une interface d'entrée et de sortie (440) conçue pour fournir un branchement à un dispositif de charge externe (200) ; et
un processeur (420) configuré pour détecter une opération de charge anormale du dispositif de charge externe (200) et pour commander l'initialisation du dispositif de charge externe (200) ou de l'interface d'entrée et de sortie (440) en réponse à une opération de charge anormale du dispositif de charge externe (200) branché, ledit processeur (420) étant configuré pour sélectionner un paramètre de charge provenant d'une table de charge reçue du dispositif de charge externe (200) par l'intermédiaire d'un canal de communication sans fil, et pour demander au dispositif de charge externe (200) de délivrer une puissance de charge en réponse au paramètre de charge sélectionnée.

7. Dispositif électronique (100) selon la revendication 6, avant que la communication avec le dispositif de charge externe (200) ne soit terminée, ledit processeur (420) étant configuré pour ajuster un paramètre de circuit de charge associé à la charge par rapport à un paramètre de charge spécifié.

8. Dispositif électronique (100) selon la revendication 6, lorsqu'une erreur survient durant une communication avec le dispositif de charge externe (200), ledit processeur (420) étant configuré pour commander l'initialisation.

9. Dispositif électronique (100) selon la revendication 6, ladite interface d'entrée et de sortie comprenant un module de détection conçu pour détecter une puissance de charge qui est différente d'un paramètre de charge demandé au dispositif de charge externe (200).

10. Dispositif électronique (100) selon la revendication 6, ledit processeur (420) étant configuré pour commander le court-circuitage des lignes de signaux branchées au dispositif de charge externe (200) associé à la réalisation de l'initialisation et pour transmettre un signal, pour régler une valeur d'un registre de réinitialisation disposé dans le dispositif de charge externe (200) par rapport à une valeur d'initialisation, au dispositif de charge externe (200) associé à la réalisation de l'initialisation.

11. Dispositif électronique (100) selon la revendication 6, ledit processeur (420) étant configuré pour commander l'initialisation d'au moins un parmi le dispositif de charge externe (200) ou l'interface d'entrée et de sortie si le dispositif de charge externe (200) se branche au dispositif électronique (100) tout en amorçant le dispositif électronique (100) ;
pour régler une tension d'une ligne de signal branchée au dispositif de charge externe (200) par rapport à une valeur prédéfinie associée à la réalisation de l'initialisation ; ou
pour régler un paramètre de circuit de charge associé à la charge par rapport à un paramètre de charge d'initialisation associé à la réalisation de l'initialisation.

12. Dispositif électronique (100) selon la revendication 6, ledit processeur (420) étant configuré pour commander la sortie d'au moins un parmi des informations sur la survenue de l'opération de charge anormale ou des informations sur un temps estimé pour charger complètement une batterie du dispositif électronique (100) en réponse à la survenue de l'opération de charge anormale.
